## Europäisches Patentamt

## European Patent Office

## Office européen des brevets

(11) Veröffentlichungsnummer: **0 273 110**

**A1**

(12) **EUROPÄISCHE PATENTANMELDUNG**

(21) Anmeldenummer: **87114089.3**

(22) Anmeldetag: **26.09.87**

(51) Int. Cl.4: **F16B 37/00 , B29C 45/16 , //F16K31/06**

(30) Priorität: **27.11.86 DE 3640626**

(43) Veröffentlichungstag der Anmeldung:
**06.07.88 Patentblatt 88/27**

(84) Benannte Vertragsstaaten:
**DE FR GB IT**

(71) Anmelder: **WABCO Westinghouse Steuerungstechnik GmbH & Co.**
**Bartweg 13 Postfach 91 12 70**
**D-3000 Hannover 91(DE)**

(72) Erfinder: **Göttling, Helmut**
**Fuhrenkamp 4**
**D-3004 Isernhagen 4(DE)**
Erfinder: **Möller, Rudolf, Ing. grad**
**Knülweg 15 c**
**D-3007 Gehrden 1(DE)**
Erfinder: **Müller, Peter**
**Ossietzkyring 37 F**
**D-3000 Hannover 91(DE)**
Erfinder: **Scharnowski, Gerhard, Ing. grad.**
**Im Vogelsang 12**
**D-3007 Gehrden 1(DE)**

(74) Vertreter: **Schrödter, Manfred**
**WABCO Westinghouse Fahrzeugbremsen GmbH Am Lindener Hafen 21 Postfach 91 12 80**
**D-3000 Hannover 91(DE)**

(54) **Befestigungselement mit Dichtung.**

(57) Die Anmeldung betrifft ein Befestigungselement (1) mit Dichtung (9, 12), welches auf einen durch eine Wand eines Gehäuses hindurchgeführten Körper, insbesondere ein Entlüftungsrohr (5) eines Ventils (6), aufschraubbar ist. Das Befestigungselement (1) und die Dichtung (9, 12) bestehen aus Werkstoffen unterschiedlicher Elastizität, wobei der Werkstoff der Dichtung (9, 12) eine größere Elastizität aufweist als der Werkstoff des Befestigungselementes (1). Das Befestigungselement (1) und die Dichtung (9, 12) sind im Spritzgußverfahren hergestellt. Die Dichtung (9, 12) weist Verankerungsvorsprünge (2, 10, 11, 31) auf, die in Ausnehmungen des Befestigungselementes (1) gehalten werden.

FIG. 1

## Befestigungselement mit Dichtung

Die Erfindung betrifft ein Befestigungselement mit Dichtung gemäß dem Oberbegriff des Patentanspruchs 1.

Ein derartiges Befestigungselement wird beispielsweise benötigt, um bei einem Magnetventil die Magnetspule auf dem gleichzeitig ein Ankerführungsrohr bildenden Entlüftungsrohr des Magnetventils zu halten und eine Abdichtung zwischen dem Entlüftungsrohr und dem Spulengehäuse bzw. dem Befestigungselement und dem Spulengehäuse zu erzielen.

Aus dem DE-GM 19 62 752 ist ein Magnetventil bekannt, welches ein aus dem Gehäuse des Ventils herausgeführtes Entlüftungsrohr aufweist, dessen aus dem Spulengehäuse herausragendes Ende mit einem Gewinde zur Aufnahme einer Mutter versehen ist. Das Entlüftungsrohr dient zum einen als Führung für einen wenigstens teilweise aus magnetisierbarem Material bestehenden Anker, welcher Bestandteil eines Einlaßventils und eines Auslaßventils ist und zum anderen als Halterung für eine Magnetspule, welche auf diese Halterung, die auch als Ankerrohr bezeichnet wird, aufgeschoben und von der Mutter gesichert wird.

In einer sowohl dem Spulengehäuse als auch dem Entlüftungsrohr zugewandten Ausnehmung der Mutter ist ein Dichtring angeordnet, welcher bei aufgeschraubter Mutter als Dichtung zwischen Spulengehäuse und Mutter dient. Die Abdichtung zwischen Entlüftungsrohr und Spulengehäuse ist bei elektromagnetisch betätigbaren Ventilen von besonderer Bedeutung, da das Eindringen von Feuchtigkeit in das Spulengehäuse des Elektromagneten zum Durchschlagen der Spule und somit zur Funktionsuntüchtigkeit des Ventils führen würde.

Von Nachteil ist bei diesem bekannten Befestigungselement, daß mehrere Bauteile benötigt werden, um z. B. bei einem elektromagnetisch betätigbaren Ventil die Magnetspule auf dem Entlüftungsrohr zu halten und das Eindringen von Feuchtigkeit in das Innere des Spulengehäuses zu verhindern.

Um diesen Nachteil zu vermeiden, kann das Befestigungselement mit Dichtung einstückig ausgebildet werden. An das im Spritzgußverfahren hergestellte Befestigungselement wird die Dichtung gleich mit angeformt. Von Nachteil ist bei einem derartigen Befestigungselement mit Dichtung jedoch, daß die Dichtung aus dem gleichen Werkstoff besteht wie das Befestigungselement. Da das Befestigungselement aus Gründen der Festigkeit und Handhabung eine nur relativ geringe Elastizität aufweisen soll, hat die angeformte Dichtung ebenfalls nur eine relativ geringe Elastizität. Das hat den Nachteil, daß zum Erzielen einer guten Abdichtung das Befestigungselement mit einem großen Anzugsmoment festgezogen werden muß.

Der Erfindung liegt deshalb die Aufgabe zugrunde, ein Befestigungselement mit Dichtung der eingangs erwähnten Art zu schaffen, welches aus wenigen Einzelteilen besteht und bei welchem sich mit einem geringeren Anzugsmoment eine ausreichende Abdichtung erzielen läßt.

Diese Aufgabe wird mit den im Patentanspruch 1 angegebenen Mitteln unter Anwendung des im Unteranspruch 7 angegebenen Verfahrens gelöst. Weiterbildungen und vorteilhafte Ausgestaltungen der Erfindung sind in den Unteransprüchen 2 bis 7 sowie in den Verfahrensansprüchen 8 und 9 angegeben.

Die Erfindung bietet insbesondere den Vorteil, auf einfache Art und Weise ein Befestigungselement mit Dichtung zu erhalten, welches sowohl die an ein Befestigungselement als auch die an eine Dichtung gestellten Anforderungen optimal erfüllt, ohne daß die Nachteile bekannter Befestigungselemente mit Dichtung, wie Verwendung mehrerer Bauteile oder bei einstückiger Ausbildung relativ großer Kraftaufwand bei der Montage zwecks Erzielung guter Abdichtung, in Kauf genommen werden müssen.

Das erfindungsgemäße Befestigungselement mit Dichtung ist aufgrund seiner im Spritzgußverfahren einteilig herstellbaren Ausbildung einfach zu fertigen und leicht zu montieren. Es ist dann nicht mehr erforderlich, bei der Montage auf korrektes Einlegen der Dichtung in die Nut des Befestigungselementes zu achten, und es ist dann auch nicht mehr notwendig, ein spezielles Werkzeug zum Anziehen des als Mutter ausgebildeten Befestigungselementes zu verwenden.

Gemäß einer vorteilhaften Weiterbildung der Erfindung sind am Befestigungselement zwei Dichtungen vorgesehen, wobei die eine Dichtung der Gewindebohrung des Befestigungselementes zugeordnet ist und die andere Dichtung an der Mantelfläche des Befestigungselementes angeordnet ist.

Gemäß einer in den Unteransprüchen angegebenen Weiterbildung des Verfahrens werden beide Dichtungen, insbesondere gleichzeitig, an das Befestigungselement angespritzt. Für diesen Zweck ist das Befestigungselement mit wenigstens einer kanalartigen Ausnehmung versehen, die sich von der Mantelfläche des Befestigungselementes bis zur Gewindebohrung des Befestigungselementes hin erstreckt. Sind nach dem Fertigstellen des Befestigungselementes in einem ersten Arbeitsgang die Formen für die Dichtungen an dem Befestigungselement zur Anlage gebracht worden, so muß in einem zweiten Arbeitsgang lediglich in eine der beiden Formen Werkstoff für die Dichtungen eingespritzt werden. Von der einen Form gelangt der Werkstoff durch die kanalartigen Ausnehmungen im Befestigungselement auch in die andere Form, so daß mit diesem Arbeitsgang gleichzeitig zwei Dichtungen an das Befestigungselement angespritzt werden. Da nach dem Füllen beider Formen Werkstoff in der kanalartigen Ausnehmung im Befestigungselement verbleibt, wird ein die beiden Dichtungen miteinander verbindender Steg gebildet, so daß die Dichtungen sich gegenseitig am Befestigungselement halten.

Gemäß einer weiteren vorteilhaften Weiterbildung der Erfindung wird der Werkstoff für das Befestigungselement mit Anteilen eines ferromagnetischen Werkstoffes angereichert. Dies hat den Vorteil, daß bei Verwendung des Befestigungselementes als Halteeinrichtung für die Magnetspule eines Magnetventils auch die zur Reduzierung des Luftspaltes zwischen Spule und Anker dienende, als Mutter ausgebildete Stahleinlage im Befestigungselement verzichtet werden kann. Wird keine Veränderung des Werkstoffes des Befestigungselementes gewünscht, so ist es gemäß einer vorteilhaften Ausgestaltung des Erfindungsgegenstandes auch möglich, die Form für das Befestigungselement so auszubilden, daß das Gewinde für das Befestigungselement Bestandteil des als Kunststoffspritzteil hergestellten Befestigungselementes ist und in das Befestigungselement lediglich eine Scheibe aus einem ferromagnetischen Werkstoff integriert wird.

Anhand der Zeichnung werden nachfolgend zwei Ausführungsbeispiele der Erfindung näher erläutert.

Es zeigen:

Fig. 1 einen Ausschnitt eines Magnetventils mit Befestigungselement für die Magnetspule auf dem Ankerführungsrohr, wobei das Befestigungselement zwei integrierte Dichtungen enthält,

Fig. 2 ein Befestigungselement mit einer der Gewindebohrung zugeordneten Dichtung und einer an der Mantelfläche des Befestigungselementes angeordneten Dichtung, wobei die Dichtungen über einen Steg miteinander verbunden sind,

Fig. 3 ein als Mutter ausgebildetes Befestigungselement mit Ausnehmungen zur Aufnahme von Verankerungsvorsprüngen von Dichtringen und

Fig. 4 ein als Mutter ausgebildetes Befestigungselement mit einer kanalartig ausgebildeten Ausnehmung zur Aufnahme eines zwei Dichtungen miteinander verbindenden Steges.

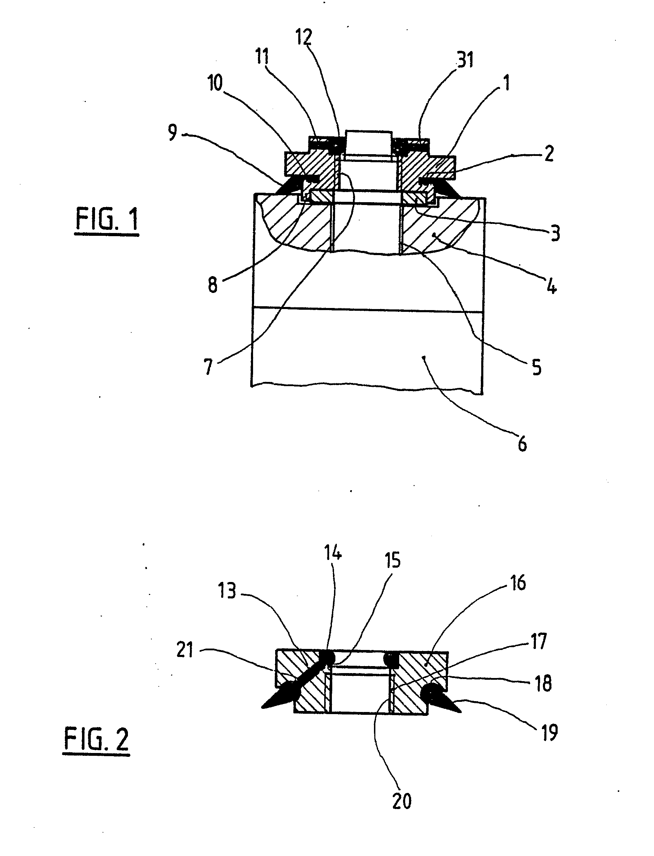

Gemäß Fig. 1 ist auf das aus einem Ventil (6) herausgeführte Ankerführungs-und Entlüftungsrohr (5) eine Magnetspule (4) soweit aufgeschoben, daß sie am Ventil (6) zur Anlage kommt. Auf den mit Gewinde versehenen Endbereich des Entlüftungsrohres (5) ist ein als Spritzgußteil hergestelltes mit Gewinde (7) versehenes Befestigungselement (1) aufgeschraubt. Das Befestigungselement (1) besteht aus Kunststoff. Das Gewinde (7) ist direkt in die Wandung der Gewindebohrung des Befestigungselementes (1) eingeformt. Auf der der Spule (4) zugewandten Seite des Befestigungselementes (1) ist eine Ringscheibe (3) aus einem ferromagnetischen Werkstoff in einer an die Gewindebohrung anschließenden, einen größeren Durchmesser als die Gewindebohrung aufweisenden Ausnehmung (8) des Befestigungselementes (1) angeordnet. Das Befestigungselement (1) weist eine an seiner Mantelfläche angeordnete erste ringförmige Dichtung (9) auf, welche dichtend an dem als Spulengehäuse ausgebildeten Gehäuse (4) der Magnetspule anliegt und so eine Dichtung zwischen dem Befestigungselement (1) und Spulengehäuse bildet. Eine zweite ringförmige Dichtung (12) ist der Gewindebohrung des Befestigungselementes (1) zugeordnet und bildet so eine Dichtung zwischen Befestigungselement (1) und Entlüftungsrohr (5). Die erste Dichtung (9) weist Verankerungsvorsprünge (2) und (10) auf, die in entsprechenden Ausnehmungen im Befestigungselement (1) gehalten werden. Desgleichen weist die zweite Dichtung (12) Verankerungsvorsprünge (31) und (11) auf, die sich in entsprechende Ausnehmungen des Befestigungselementes (1) hineinerstrecken. Die Ausnehmungen zur Aufnahme der Verankerungsvorsprünge sind als einfache geradlinig verlaufende Vertiefungen, die an die Lagerstellen für die Dichtungen im Befestigungselement (1) anschließen, ausgebildet. Sie können sich auch durch den gesamten Querschnitt des Befestigungselementes (1) hindurch erstrecken. Bei der außenliegenden Dichtung (9) kann der Verankerungsvorsprung von einem Teil des Querschnittes der Dichtung gebildet werden. Als Ausnehmung zur Aufnahme des Befestigungsvorsprunges kann auch die Lagerstelle für die Dichtung dienen.

In Fig. 2 ist ein Befestigungselement dargestellt, welches aus einem Kunststoffkörper (16) und einem in einer Ausnehmung (17) des Kunststoffkörpers (16) angeordneten Gewindeeinsatz (20) aus einem ferromagnetischen Werkstoff besteht. Der Gewindeeinsatz (20) stellt die eigentliche Mutter dar. In einen sich über den Gewindeeinsatz (20) hinauserstreckenden Bereich der die Ausnehmung (17) des Kunststoffkörpers (16) begrenzenden Wandung ist in einer nutartigen umlaufenden Lagerstelle (15) eine erste ringförmige Dichtung (14) angeordnet. Eine zweite ringförmige Dichtung (19) ist in einer umlaufenden nutartigen Lagerstelle (18) in der Mantelfläche des Kunststoffkörpers (16) angeordnet. Die Lagerstelle (15) für die erste Dichtung (14) und die Lagerstelle (18) für die zweite Dichtung (19) sind über eine im Kunststoffkörper (16) angeordnete kanalartige Ausnehmung (13) miteinander verbunden. Die kanalartige Ausnehmung (13) wird von einem die beiden Dichtungen (14) und (19) miteinander verbindenden Steg (21) ausgefüllt. Mittels des Steges (21) werden die beiden Dichtungen (14) und (19) in den zugeordneten Lagerstellen (15) und (18) am Befestigungselement (16, 17, 20) gehalten. Es ist selbstverständlich möglich, im Kunststoffkörper (16) mehrere kanalartige Ausnehmungen (13) und somit auch mehrere die Dichtungen (14, 19) miteinander verbindende Stege (21) anzuordnen

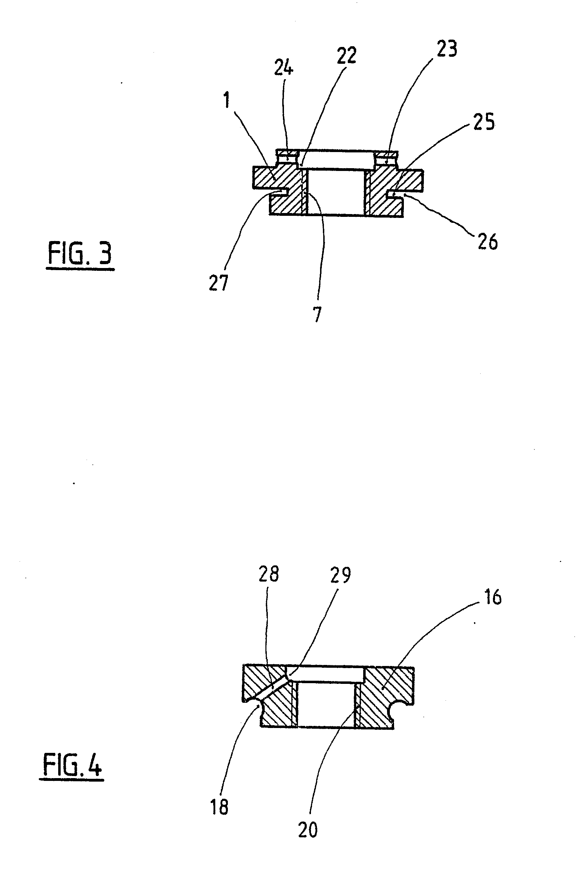

Fig. 3 zeigt ein Befestigungselement mit Ausnehmungen zur Aufnahme von Verankerungsvorsprüngen von Dichtungen gemäß Fig. 1, jedoch ohne Dichtungen. Der besseren Übersicht halber sind die den in Fig. 1 dargestellten Teilen gleichen Teile mit gleichen Bezugszeichen versehen.

Das Befestigungselement besteht aus einem Kunststoffkörper (1) mit einer in Richtung seiner Längsachse verlaufenden Ausnehmung zur Aufnahme eines mit Gewinde versehenen Bauteiles, wie z. B. des Entlüftungsrohres eines Magnetventils. Die die Ausnehmung begrenzende Wandung ist auf dem überwiegenden Teil ihrer axialen Erstreckung mit Gewinde (7) versehen, so daß eine aus Kunststoff bestehende Mutter gebildet wird. In der Mantelfläche des Kunststoffkörpers (1) sind, ausgehend von der Lagerstelle (26) für einen ersten Dichtring, sich in den Kunststoffkörper (1) hinein erstreckende Ausnehmungen (25, 27) zur Aufnahme von Verankerungsvorsprüngen des Dichtringes angeordnet. In der die Ausnehmung zur Aufnahme des Entlüftungsrohres begrenzenden Wandung sind ebenfalls Ausnehmungen (23) und (24) zur Aufnahme von Verankerungsvorsprüngen eines zweiten Dichtringes vorgesehen. Diese Ausnehmungen (23, 24) sind im Bereich der Lagerstelle (22) für den zweiten Dichtring angeordnet und erstrecken sich in Richtung von der Lagerstelle (22) weg in den Kunststoffkörper (1) hinein.

Die Ausnehmungen zur Aufnahme von Verankerungsvorsprüngen von Dichtungen sind nicht an die gezeigte Ausführungsform gebunden. Sie können jede beliebige Form aufweisen, durch welche sichergestellt ist, daß nach dem Zusammenfügen von Befestigungselement und Dichtung die Dichtung in ihrer Lagerstelle gehalten wird.

Das in Fig. 4 dargestellte Befestigungselement entspricht im wesentlichen dem in Fig. 2 gezeigten Befestigungselement. Anstelle eines Gewindeeinsatzes ist das Gewinde (20) jedoch direkt in die eine Ausnehmung zur Aufnahme eines mit Gewinde versehenen Bauteiles begrenzende Wand (32) des Befestigungselementes eingeformt. Das Befestigungselement besteht aus einem Kunststoffkörper (16) mit Gewindebohrung und Gewinde (20). In der Mantelfläche des Kunststoffkörpers (16) ist eine erste Lagerstelle (18) für einen ersten Dichtring angeordnet. Eine zweite Lagerstelle (29) für einen zweiten Dichtring ist in der die Ausnehmung zur Aufnahme eines Gewinde tragenden Bauteiles begrenzenden Wand angeordnet. Im Kunststoffkörper (16) ist wenigstens eine kanalartige Ausnehmung (28) zur Aufnahme von Verankerungsvorsprüngen der Dichtringe bzw. zur Aufnahme eines die Dichtringe miteinander verbindenden Steges angeordnet. Die Ausnehmung (28) beginnt an der Lagerstelle (29) für den einen Dichtring und endet an der Lagerstelle (18) für den jeweils anderen Dichtring. Die kanalartige Ausnehmung (28) erstreckt sich somit vom äußeren Mantel des Befestigungselementes (16, 20, ) ausgehend bis zur Gewindebohrung (20) des Befestigungselementes hin.

Das Befestigungselement mit Dichtung wird nach dem nachstehend beschriebenen Verfahren hergestellt.

In einer ersten Form wird das ein Befestigungselement bildende erste Teil aus einem ersten Werkstoff, z. B. einem Kunststoff, der eine bestimmte Festigkeit und Elastizität aufweist, auf einer Spritzgußmaschine gespritzt. Die Form für die Herstellung des Befestigungselementes ist so ausgebildet, daß der fertiggestellte Kunststoffkörper des Befestigungselementes Ausnehmungen zur Aufnahme von Verankerungsvorsprüngen eines mit dem Kunststoffkörper zu verbindenden eine Dichtung bildenden zweiten Teiles enthält. Nach Fertigstellung des Befestigungselementes wird ein Teil der ersten Form entfernt und eine zweite Form für das eine ringförmige Dichtung bildende zweite Teil wird im Bereich der im ersten Teil angeordneten Ausnehmungen mit dem von der ersten Form befreiten Teil des Befestigungselementes in Kontakt gebracht. Die zweite Form weist auf ihrer dem Befestigungselement zugewandten Seite einen offenen Bereich auf. Nach dem zur Anlage Bringen der zweiten Form am Befestigungselement wird in die zweite Form ein Werkstoff eingespritzt, der eine größere Elastizität aufweist als der Werkstoff des Befestigungselementes. Der in die zweite Form eingespritzte Kunststoff dringt bei diesem Vorgang auch in die Ausnehmungen des Befestigungselementes ein, so daß mit der Dichtung einstückig ausgebildete Verankerungsvorsprünge entstehen, die das Befestigungselement und die Dichtung miteinander verbinden. Nach diesem Vorgang werden die zweite Form und der noch verbliebene Teil der ersten Form von der Dichtung und vom Befestigungselement entfernt.

Das nach dem vorstehenden Verfahren gefertigte Befestigungselement mit Dichtung ist zwar als eine einteilige Baueinheit ausgebildet, jedoch nicht einstückig d. h. nicht aus demselben Werkstoff bestehend ausgebildet.

Sollen an einem Befestigungselement zwei Dichtungen vorgesehen werden, von denen die eine an der Mantelfläche angeordnet und die andere der das Gewinde tragenden Ausnehmung des Befestigungselementes zugeordnet sein soll, so wird in einer ersten Form das das Befestigungselement bildende erste Teil gespritzt. Die erste Form ist so ausgebildet, daß nach dem Fertigstellen des Befestigungselementes in dessen Kunststoffkörper eine kanalartige Ausnehmung gebildet ist, die sich von der Mantelfläche des Befestigungselementes ausgehend bis zu der das Gewinde tragenden Ausnehmung des Befestigungselementes hin erstreckt. Nach Fertigstellung des Befestigungselementes wird die erste Form entfernt und eine zweite Form für das eine erste Dichtung bildende zweite Teil sowie eine dritte Form für ein eine zweite Dichtung bildendes drittes Teil werden mit dem Befestigungselement in Kontakt gebracht, derart, daß sie mit ihrer offenen Seite je an einer Öffnung der die Mantelfläche mit der Gewindebohrung verbindenden kanalartigen Ausnehmung des ersten Teiles anliegen. Anschließend wird lediglich in eine entweder in der zweiten Form oder in der dritten Form angeordnete Füllöffnung ein Werkstoff, der eine größere Elastizität aufweist als der Werkstoff, aus dem das erste Teil hergestellt ist, wie z. B. Kunststoff, von relativ großer Elastizität, eingespritzt. Der Werkstoff gelangt in die mit der Füllöffnung versehene eine Form und von dieser weiter durch die kanalartige Ausnehmung in die jeweils andere Form. Von einer Seite aus werden auf diese Art und Weise die zweite Form und die dritte Form sowie die kanalartige Ausnehmung mit Kunststoffmasse gefüllt.

Nach dem Entfernen der zweiten Form und der dritten Form verbleibt als Fertigprodukt ein Befestigungselement mit zwei Dichtungen, deren Verankerungsvorsprünge von einem beide Dichtungen miteinander verbindenden Steg gebildet werden, der in der kanalartigen Ausnehmung des ersten Teiles angeordnet ist. Die beiden Dichtungen halten sich so gegenseitig am Befestigungselement bzw. in den am Befestigungselement vorgesehenen Lagerstellen für die Dichtungen.

Das erfindungsgemäße Befestigungselement mit Dichtung ist selbstverständlich nicht nur für Entlüftungsrohre von Ventilen geeignet, sondern für jeden beliebigen durch eine Wand eines Gehäuses hindurchgeführten Körper, wenn eine Abdichtung zwischen Gehäuse und besagtem Körper bzw. zwischen Befestigungselement und Körper gewünscht wird.

## Ansprüche

1. Befestigungselement mit Dichtung, welches auf einen durch eine Wand eines Gehäuses (4) hindurchgeführten Körper (5), insbesondere ein Entlüftungsrohr eines Ventils, aufschraubbar ist, wobei die Dichtung aus einem Werkstoff besteht, der eine größere Elastizität aufweist als der Werkstoff des Befestigungselementes, gekennzeichnet durch die folgenden Merkmale:

a) Das Befestigungselement (1, 16) und die Dichtung (12, 9) sind als Spritzgußteile hergestellt;

b) an der Dichtung (12, 9) ist wenigstens ein Verankerungsvorsprung (11, 31, 10, 2) zur Befestigung der Dichtung (12, 9) am Befestigungselement (1, 16) angeordnet;

c) das Befestigungselement (1, 16) weist wenigstens eine Ausnehmung zur Aufnahme des an der Dichtung (12, 9) angeordneten Verankerungsvorsprunges (11, 31, 10, 2) auf.

2. Befestigungselement nach Anspruch 1, dadurch gekennzeichnet, daß das Befestigungselement (1, 16) und die Dichtung (12, 9) als eine einteilige Baueinheit ausgebildet sind.

3. Befestigungselement nach Anspruch 1, dadurch gekennzeichnet, daß die Ausnehmung zur Aufnahme des Verankerungsvorsprunges (11, 31, 10, 2) sich von der Dichtung weg in das Befestigungselement (1, 16) hineinerstreckt.

4. Befestigungselement nach Anspruch 1, dadurch gekennzeichnet, daß der Werkstoff, aus dem das Befestigungselement (1, 16) hergestellt ist, Anteile eines ferromagnetischen Werkstoffes enthält.

5. Befestigungselement nach wenigstens einem der vorhergehenden Ansprüche mit zwei Dichtungen, wobei die eine Dichtung am äußeren Mantel des Befestigungselementes angeordnet ist und bei aufgeschraubtem Befestigungselement eine Dichtung zwischen Gehäuse und Befestigungselement bildet und die andere Dichtung der Gewindebohrung des Befestigungselementes zugeordnet ist und eine Dichtung zwischen Befestigungselement und Körper bildet, gekennzeichnet durch die folgenden Merkmale:

a) Die Ausnehmung (28) im Befestigungselement (16, 20, 32) ist kanalartig ausgebildet und erstreckt sich vom äußeren Mantel des Befestigungselementes (16, 20, 32) ausgehend bis zur Gewindebohrung (20) des Befestigungselementes (16, 20, ) hin;

b) die Verankerungsvorsprünge der beiden Dichtungen (14, 19) werden von einem beide Dichtungen (14, 19) miteinander verbindenden Steg (13) gebildet, der in der kanalartigen Ausnehmung (28) angeordnet ist.

6. Befestigungselement nach wenigstens einem der vorhergehenden Ansprüche, dadurch gekennzeichnet, daß in den Werkstoff des Befestigungselementes (1, 16) ein scheibenförmiger Körper (3) aus einem ferromagnetischen Werkstoff eingebettet ist.

7. Befestigungselement nach wenigstens einem der vorhergehenden Ansprüche, dadurch gekennzeichnet, daß als Träger für das Gewinde eine Einlage (20) aus einem metallischen Werkstoff vorgesehen ist.

8. Verfahren zur Herstellung eines Befestigungselementes mit Dichtung, welches auf einen durch eine Wand eines Gehäuses (4) hindurchgeführten Körper (5), insbesondere ein Entlüftungsrohr eines Ventils, aufschraubbar ist, wobei die Dichtung aus einem Werkstoff besteht, der eine größere Elastizität aufweist als der Werkstoff des Befestigungselementes, gekennzeichnet durch die folgenden Herstellungsschritte:

a) In einer ersten Form wird auf einer Spritzgußmaschine ein das Befestigungselement (1, 16) bildendes erstes Teil gespritzt, wobei die Form für das erste Teil so ausgebildet ist, daß im ersten Teil wenigstens eine Ausnehmung (24) zur Aufnahme wenigstens eines Verankerungsvorsprunges wenigstens eines die Dichtung (12) bildenden zweiten Teiles verbleibt;

b) anschließend wird wenigstens ein Teil der ersten Form vom ersten Teil entfernt und eine die Dichtung formende zweite Form wird mit dem ersten Teil im Bereich der im ersten Teil angeordneten Ausnehmung (24) in Kontakt gebracht, wobei die zweite Form so ausgebildet ist, daß sie auf ihrer dem ersten Teil zugewandten Seite einen offenen Bereich aufweist;

c) in die zweite Form und die Ausnehmung (24) des ersten Teiles wird ein Werkstoff eingespritzt, der eine größere Elastizität aufweist als der Werkstoff des ersten Teiles.

9. Verfahren nach Anspruch 8, gekennzeichnet durch die folgenden Herstellungsschritte:

a) Mit der der zweiten Form abgewandten Seite des ersten Teiles wird eine dritte Form in Kontakt gebracht, wobei die dritte Form zur Herstellung eines eine zweite Dichtung bildenden dritten Teiles dient;

b) die zweite Form und die dritte Form werden so mit dem ersten Teil in Kontakt gebracht, daß sie mit ihrer offenen Seite je an einer Öffnung der die Mantelfläche mit der Gewindebohrung verbindenden kanalartigen Ausnehmung des ersten Teiles anliegen;

c) über eine Füllöffnung in einer der beiden Formen wird ein Werkstoff, der eine größere Elastizität aufweist als der Werkstoff des ersten Teiles, in die zweite Form bzw. die dritte Form und weiter über die kanalartige Ausnehmung in die dritte Form bzw. die zweite Form eingespritzt, so daß die dritte Form, die kanalartige Ausnehmung und die zweite Form in einem Arbeitsgang mit dem die Dichtungen und den die Dichtungen miteinander verbindenden Steg bildenden Werkstoff gefüllt werden.

FIG. 1

FIG. 2

0 273 110

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 709 000 (SCHAEFFLER) <br> * Insgesamt * <br> --- | 1-9 | F 16 B 37/00 <br> B 29 C 45/16 // <br> F 16 K 31/06 |
| A | GB-A- 830 722 (MORSE) <br> * Seite 1, Zeilen 9-38; Seite 2, Zeilen 55-129; Figur 4 * <br> --- | 1 | |
| A | DE-A-2 822 615 (GOETZE) <br> * Insgesamt * <br> --- | 1-7 | |
| A | EP-A-0 180 383 (ARONKASEI CO., LTD) <br> * Seite 10, Zeile 22 - Seite 12, Zeile 18 * <br> ----- | 4,8 | |

**RECHERCHIERTE SACHGEBIETE (Int. Cl.4)**

B 29 C
F 16 B
F 16 J

Der vorliegende Recherchenbericht wurde für alle Patentansprüche erstellt

| Recherchenort | Abschlußdatum der Recherche | Prüfer |
|---|---|---|
| DEN HAAG | 24-02-1988 | VAN DER WAL W |

EPO FORM 1503 03.82 (P0403)